# EUROPÄISCHE PATENTSCHRIFT

(11) **EP 2 163 525 B1**
(45) Veröffentlichungstag und Bekanntmachung des Hinweises auf die Patenterteilung: **29.04.2015**
(21) Anmeldenummer: 09000829.3
(22) Anmeldetag: 22.01.2009
(51) Int. Cl.: C02F 3/30

(54) **Verfahren zur Behandlung von ammoniumhaltigem Abwasser**
Method for treating ammonium containing wastewater.
Procédé de traitement d'effluents contenant d'ammonium.

(30) Priorität: 12.09.2008 EP 08016104
(43) Veröffentlichungstag der Anmeldung: 17.03.2010
(73) Patentinhaber: Demon GmbH, 8737 Gommiswald (CH)
(72) Erfinder:
(74) Vertreter: Scheffler, Jörg

(56) Entgegenhaltungen:
- EP-A- 0 383 674
- EP-A- 0 634 370
- EP-A- 0 949 206
- WO-A-97/33839
- US-A- 2 337 507
- INNEREBNER ET AL: "Identification of anammox bacteria in a full-scale deammonification plant making use of anaerobic ammonia oxidation", SYSTEMATIC AND APPLIED MICROBIOLOGY, URBAN & FISCHER, AMSTERDAM, NL, vol. 30, no. 5, 30 July 2007 (2007-07-30), pages 408-412, XP022125646, ISSN: 0723-2020, DOI: 10.1016/J.SYAPM.2007.02.001

## Beschreibung

Die Erfindung betrifft ein Verfahren zur Behandlung von ammoniumhaltigem Abwasser in einer deammonifizierenden Belebungsanlage, bei welchem zunächst mittels aerob oxidierender Bakterien (AOB) Ammonium zu Nitrit umgesetzt wird und anschließend mittels anaerob oxidierender Bakterien (AMOX), insbesondere mittels Planctomyceten, Ammonium und Nitrit in elementaren Stickstoff umgesetzt werden, wobei bei dem Verfahren entstehender Überschussschlamm aus dem Becken abgeführt wird und der abgeführte Überschussschlamm in eine schwere Phase, welche mehrheitlich die anarob Ammonium oxidierenden Bakterien (AMOX) enthält, und in eine leichte Phase separiert wird.

Ein Verfahren der eingangs genannten Art ist bereits aus der INNEREBNER ET AL: "Identification of anammox bacteria in a full-scale deammonification plant making use of anaerobic ammonia oxidation" (SYSTEMATIC AND APPLIED MICROBIOLOGY, URBAN & FISCHER, AMSTERDAM, NL, Bd.30, Nr.5, 30 Juli 2007 (2007-07-30), Seiten 408-412, XP022125646, ISSN: 0723-2020, DOI: 10.1016/J.SYAMP.2007.02.001) bekannt.

In herkömmlichen Kläranlagen wird heute fast ausschließlich die biologische Nitrifikation/Denitrifikation zur Stickstoffelimination eingesetzt. Unter Stickstoffelimination versteht man die Umwandlung von biologisch verfügbaren Stickstoffverbindungen wie Ammonium (NH₄), Nitrit (NO₂) und Nitrat (NO₃) zu elementarem Stickstoff (N₂), welcher als harmloses Endprodukt in die Umgebungsluft ausgast. Bei der Nitrifikation wird Ammonium durch Sauerstoff über das Zwischenprodukt Nitrit zu Nitrat oxidiert. Bei der anschließenden Denitrifikation wird das Nitrat in einem ersten Reduktionsschritt zu Nitrit und in einem zweiten Reduktionsschritt zu Stickstoff reduziert.

Die biologische Nitrifikation/Denitrifikation hat den Nachteil eines hohen Sauerstoffbedarfs und damit hohen Energieverbrauchs. Zudem wird bei der Denitrifikation organischer Kohlenstoff verbraucht, was sich nachteilig auf den weiteren Reinigungsprozess und die Schlammeigenschaften auswirkt.

Gegenüber der Nitrifikation/Denitrifikation wird bei der Deammonifikation nur die Hälfte des Sauerstoffs benötigt bzw. der Energieverbrauch für die Stickstoffelimination halbiert. Die Deammonifikation ist ein autotropher Prozess, bei dem kein organischer Kohlenstoff benötigt wird. Damit wird der übrige Reinigungsprozess stabiler.

Die Deammonifikation ist ein effizientes Verfahren zur biologischen Stickstoffelimination, z.B. auch bei Abwässern mit hohen Ammoniumkonzentrationen. Bei der biologischen Deammonifikation mit suspendierter Biomasse sind zwei Bakteriengruppen beteiligt, einerseits die aerob Ammonium oxidierenden Bakterien (AOB), welche Ammonium zu Nitrit umsetzen, und andererseits die anaerob Ammonium oxidierenden und elementaren Stickstoff produzierenden Bakterien (AMOX), insbesondere Planctomyceten, welche diesen Schritt mit Hilfe des zuvor produzierten Nitrits vollziehen.

Die aerob Ammonium oxidierenden Bakterien (AOB) produzieren bezogen auf den Stoffumsatz 10-mal mehr neue Bakterienmasse als die anaerob Ammonium oxidierenden Bakterien (AMOX). Die Aufenthaltszeit des Schlamms im Ein-Schlamm-System muss also mindestens so lang sein, dass sich die langsamwüchsigen anaerob Ammonium oxidierenden Bakterien (AMOX) anreichern können.

Ein Verfahren zur einstufigen biologischen Deammonifikation der eingangs genannten Art ist bereits aus der WO 2007/033393 A1 bekannt. Die EP 0 391 023 B1, die EP 0 327 184 B1 und die WO 00/05176 A1 beschreiben ebenfalls bereits Verfahren zur einstufigen bzw. zweistufigen Deammonifikation.

Als nachteilig erweisen sich hierbei insbesondere die wesentlich längeren Generationszeiten der anaerob Ammonium oxidierenden Bakterien (AMOX), welche um den Faktor 10 länger als die aerob Ammonium oxidierenden Bakterien (AOB) sind. Dadurch kann sich ein stabiles System nur dann ausbilden, wenn die Aufenthaltszeit des Schlamms bzw. der Bakterien im Becken ausreichend groß ist. Dies bedingt wiederum große Reaktionsvolumina und entsprechend ausgebildete Becken.

Weiterhin ist eine ausreichend hohe Abwassertemperatur (> 25°C) Grundlage für die Existenz bzw. das Wachstum der anaerob Ammonium oxidierenden Bakterien (AMOX). Das Aufheizen des Abwassers ist energetisch jedoch sehr aufwändig, weshalb die beschriebenen Verfahren bei Abwässern mit niedrigen Temperaturen nicht wirtschaftlich einsetz- bzw. durchführbar sind.

Weiterhin erweist sich die Anwesenheit von solchen Bakteriengruppen (NOB) als nachteilig, welche das gebildete Nitrit unter aeroben Bedingungen in Nitrat umwandeln. Diese Gruppe Bakterien hat gegenüber den anaerob Ammonium oxidierenden Bakterien (AMOX) um den Faktor 10 kürzere Generationszeiten. Zum Ausgleich dieser unterschiedlichen Generationszeiten ist bereits daran gedacht worden, die belüftete Phase des Ein-Schlamm-Systems auf einem sehr niedrigen Sauerstoffniveau zu betreiben (< 0,4 mg O₂/I). Hierdurch steht den Nitrat bildenden Bakterien (NOB) kein bzw. wenig Sauerstoff zur Umsetzung des Nitrits zur Verfügung, was wiederum für die anaerob Ammonium oxidierenden Bakterien (AMOX) sehr vorteilhaft ist. Die reduzierte Sauerstoffzufuhr während der belüfteten Phase hat jedoch den Nachteil, dass auch die aerobe Umwandlung des Ammoniums in Nitrit sauerstofflimitiert ist und dadurch sehr langsam verläuft.

Der Erfindung liegt die Aufgabe zugrunde, ein verbessertes und wirtschaftlich durchführbares Verfahren zur Behandlung von ammoniumhaltigem Abwasser zur Verfügung zu stellen.

Diese Aufgabe wird mit einem Verfahren gemäß den Merkmalen des Anspruchs 1 gelöst. Die weitere Ausgestaltung des erfindungsgemäßen Verfahrens ist den Unteransprüchen zu entnehmen.

Erfindungsgemäß ist also ein Verfahren vorgesehen, bei welchem die schwere Phase in die Anlage zurückgeführt wird und die leichte Phase entsorgt wird. Dadurch, dass die Planctomyceten nicht im Flockenverbund auftreten und eine höhere Dichte aufweisen, kann der Oberschussschlamm in eine schwere und eine leichte Phase getrennt werden. Die Planctomyceten (AMOX) wachsen sehr dicht mit einer Dichte von ca. 10¹⁰ Bakterien/ml. Durch die Entsorgung der leichten Phase und die Rückführung der schweren Phase in das Becken kann die langsamwüchsige Gruppe der anaerob Ammonium oxidierenden Bakterien (AMOX) angereichert werden. Der Anteil der anaerob Ammonium oxidierenden Bakterien (AMOX), welcher beispielsweise in einem Ein-Schlamm-System zur reinen Stickstoffelimination, z.B. zur Behandlung von Abwässern mit hohen Stickstoffkonzentrationen mit unspezifischem Überschussschlammabzug weniger als 10% der Biomasse ausmacht, kann durch das erfindungsgemäße Verfahren auf über 30% angehoben werden. Hierdurch kann das Reaktionsvolumen des Beckens entsprechend verkleinert und die Prozessstabilität der Anlage gesteigert werden. Die Abwasserinhaltsstoffe, die schwerer als die Planctomyceten sind, müssen vor der Belebungsanlage abgetrennt werden, da sie sich anderenfalls ebenfalls im System anreichern würden. Eine derartige Abtrennung geschieht in einem Vorklärbecken oder in einem Absetzbecken, dass aufgrund der hohen Absetzgeschwindigkeit der Planctomyceten klein dimensioniert werden kann. Die Belebungsanlage kann als Ein-Becken-Anlage oder als Mehr-Becken-Anlage ausgeführt sein.

Die Temperatur des Abwassers, welche die Existenz bzw. das Wachstum der anaerob Ammonium oxidierenden Bakterien (AMOX) beeinflusst, ist durch das erfindungsgemäße Verfahren nicht mehr von entscheidender Bedeutung, sodass die Deammonifikation auch bei Abwasser mit einer Temperatur von ca. 10°C noch effektiv und prozesssicher angewendet werden kann.

Die Temperatur beeinflusst alle Bakterien mehr oder weniger in gleicher Weise (etwa eine Verdoppelung der Umsatzgeschwindigkeit je 10°C Temperaturerhöhung). Allerdings würde bei konventioneller Deammonifikation in einer Ein-Becken-Anlage bei niedrigen Temperaturen ein so großes Beckenvolumen erforderlich werden, dass es nicht mehr wirtschaftlich wird. Der Rückhalt der AMOX durch das erfindungsgemäße Verfahren ermöglicht auch bei niedrigeren Temperaturen einen effizienten Prozess.

Durch die Rückführung der schweren Phase und die damit verbundene Anreicherung verschieben sich auch die Anteile der anaerob Ammonium oxidierenden Bakterien (AMOX) zu den Nitrat bildenden Bakterien (NOB) zu Gunsten der anaerob Ammonium oxidierenden Bakterien (AMOX). Hierdurch wird der Prozess von der Nitrifikation/Denitrifikation immer weiter zur Deammonifikation verschoben. Damit kann auch die belüftete Phase zu Beginn des Prozesses bei höheren Sauerstoffkonzentrationen betrieben werden (> 0,4 mg O₂/I) und die Effizienz der Nitritbildung durch die aerob Ammonium oxidierenden Bakterien (AOB) kann um den Faktor > 2 gesteigert werden.

Außerdem lässt sich die Inbetriebnahmezeit einer neuen Anlage zur Behandlung von Abwasser durch das erfindungsgemäße Verfahren erheblich reduzieren, da der für eine prozesssichere Deammonifikation erforderliche Anteil der anaerob Ammonium oxidierenden Bakterien (AMOX) durch das Zuführen einer schweren Phase aus einer anderen Anlage wesentlich schneller erreicht wird.

Eine besonders vorteilhafte Weiterbildung des vorliegenden Verfahrens wird auch dadurch geschaffen, dass die Separierung des Überschussschlammes in eine schwere Phase und eine leichte Phase in einem Hydrozyklon durchgeführt wird. Durch einen Hydrozyklon, auch Fliehkraftabscheider genannt, lässt sich der Überschussschlamm besonders schnell und prozesssicher in eine schwere Phase, welche durch einen Unterlauf des Zyklons in das Becken zurückgeführt wird, und eine leichte Phase, welche durch den Oberlauf aus dem System abgeführt wird, trennen.

In einer alternativen Abwandlung des erfindungsgemäßen Verfahrens ist vorgesehen, dass die Separierung des Überschussschlamms in eine schwere Phase und eine leichte Phase in einer Zentrifuge durchgeführt wird. Eine Zentrifuge separiert den Überschussschlamm unter Ausnutzung der Massenträgheit. Die schwere Schlammfraktion mit der höheren Dichte wandert aufgrund ihrer Trägheit nach außen und verdrängt die leichtere Schlammfraktion mit der geringeren Dichte in die Mitte der Zentrifuge.

Weiterhin ist es möglich, dass die Separierung des Überschussschlammes in eine schwere Phase und eine leichte Phase durch Sedimentation erfolgt. Hierbei erfolgt die Trennung des Überschussschlamms in ein schwere und eine leichte Phase unter dem Einfluss der Schwerkraft.

Die Erfindung lässt verschiedene Ausführungsformen zu. Zur weiteren Verdeutlichung ihres Grundprinzips sind zwei Ausführungsformen in den Zeichnungen dargestellt und werden nachfolgend beschrieben. Diese zeigen in:
- Figur 1: eine Prinzipskizze einer Ein-Becken-Anlage zur Behandlung von ammoniumhaltigem Abwasser;
- Figur 2: eine Prinzipskizze einer Belebungsanlage zur Behandlung von ammoniumhaltigem Abwasser.

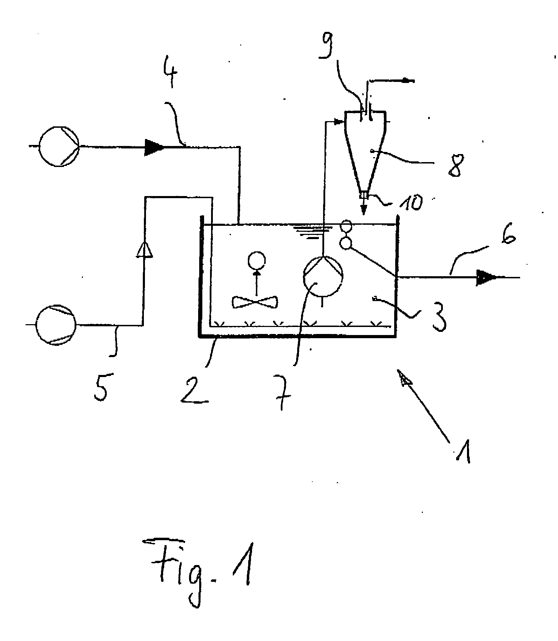

Figur 1 zeigt eine Ein-Becken-Anlage 1 zur Behandlung von ammoniumhaltigem Abwasser 3. Die Ein-Becken-Anlage 1 weist ein Becken 2 zur Aufnahme des ammoniumhaltigem Abwassers 3, einen Zulauf 4, eine Belüftung 5 und einen Ablauf 6 auf. Das in dem Abwasser 3 enthaltene Ammonium wird mittels aerob oxidierender Bakterien (AOB) zunächst in Nitrit umgesetzt. Anschließend wird mittels anaerob oxidierender Bakterien (AMOX), insbesondere mittels Planctomyceten, das Ammonium und das zuvor umgesetzte Nitrit in elementaren Stickstoff umgesetzt. Mittels einer Pumpe 7 wird bei den Reaktionen entstehender Über schussschlamm in einen Hydrozyklon 8 eingeleitet. In dem Hydrozyklon 8 wird der Überschussschlamm in ein schwere Phase, welche mehrheitlich die anaerob Ammonium oxidierenden Bakterien (AMOX) enthält, und eine leichte Phase getrennt. Die leichte Phase wird durch den Überlauf 9 des Hydrozyklons 8 abgeführt und entsorgt und die schwere Phase wird durch den Unterlauf 10 des Hydrozyklons 8 zurück in das Becken 2 der Ein-Becken-Anlage 1 geführt.

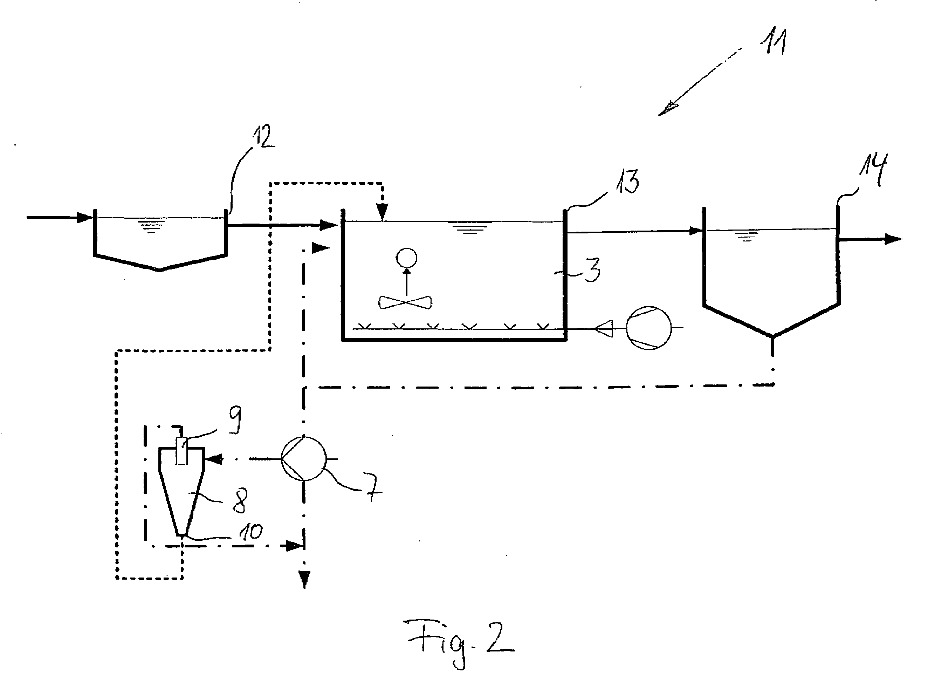

Figur 2 zeigt eine Belebungsanlage 11 zur Behandlung von ammoniumhaltigem Abwasser 3. Das Abwasser 3 gelangt von einem Vorklärbecken 12 über ein Belebungsbecken 13, in welchem das Abwasser 3 belüftet wird, in ein Nachklärbecken 14. Im Nachklärbecken 14 wird der Belebtschlamm vom Abwasser 3 durch Sedimentation getrennt und teilweise als Rücklaufschlamm in das Belebungsbecken 13 zurückgeführt bzw. als Überschussschlamm entsorgt. Mittels einer Pumpe 7 wird ein Teil des Überschussschlamms in einen Hydrozyklon 8 eingeleitet. In dem Hydrozyklon 8 wird der Überschussschlamm in eine schwere Phase, welche mehrheitlich die anaerob Ammonium oxidierenden Bakterien (AMOX) enthält, und eine leichte Phase getrennt. Die leichte Phase wird durch den Überlauf 9 des Hydrozyklons 8 abgeführt und entsorgt und die schwere Phase wird durch den Unterlauf 10 des Hydrozyklons 8 zurück in das Belebungsbecken 13 geführt.

## Patentansprüche

1. Verfahren zur Behandlung von ammoniumhaltigem Abwasser in einer deammonifizierenden Belebungsanlage, bei welchem zunächst mittels aerob oxidierender Bakterien (AOB) Ammonium zu Nitrit umgesetzt wird und anschließend mittels anaerob oxidierender Bakterien (AMOX), insbesondere mittels Planctomyceten, Ammonium und Nitrit in elementaren Stickstoff umgesetzt werden, wobei bei dem Verfahren entstehender Überschussschlamm aus dem Becken abgeführt wird und der abgeführte Überschussschlamm in eine schwere Phase, welche mehrheitlich die anaerob Ammonium oxidierenden Bakterien (AMOX) enthält, und in eine leichte Phase separiert wird, **dadurch gekennzeichnet, dass** die schwere Phase in die Anlage zurückgeführt wird.

2. Verfahren nach Anspruch 1, **dadurch gekennzeichnet, dass** die Separierung des Überschussschlamms in eine schwere Phase und eine leichte Phase in einem Hydrozyklon durchgeführt wird.

3. Verfahren nach den Ansprüchen 1 oder 2, **dadurch gekennzeichnet, dass** die Separierung des Überschussschlamms in eine schwere Phase und eine leichte Phase in einer Zentrifuge durchgeführt wird.

4. Verfahren nach zumindest einem der vorhergehenden Ansprüche, **dadurch gekennzeichnet, dass** die Separierung des Überschussschlamms in eine schwere Phase und eine leichte Phase durch Sedimentation erfolgt.

## Claims

1. Method for treating ammonium-containing wastewater in a deammonifying activated sludge system in which ammonium is first converted to nitrite by means of aerobically oxidizing bacteria (AOB) and then ammonium and nitrite are converted to elemental nitrogen by means of anaerobically oxidizing bacteria (AMOX), in particular by means of Planctomycetes, wherein excess sludge formed in the method is removed from the tank, the excess sludge removed is separated into a heavy phase which contains the majority of the anaerobically ammonium-oxidizing bacteria (AMOX) and a light phase, **characterized in that** and the heavy phase is recirculated to the system.

2. Method according to Claim 1, **characterized in that** the excess sludge is separated in a hydrocyclone into a heavy phase and a light phase.

3. Method according to either Claim 1 or 2, **characterized in that** the excess sludge is separated in a centrifuge into a heavy phase and a light phase.

4. Method according to at least one of the preceding claims, **characterized in that** the excess sludge is separated by sedimentation into a heavy phase and a light phase.

## Revendications

1. Procédé de traitement d'une eau résiduaire contenant de l'ammonium dans une installation d'activation désammonifiante, selon lequel l'ammonium est tout d'abord transformé en nitrite au moyen de bactéries oxydantes aérobies (AOB), puis l'ammonium et le nitrite sont transformés en azote élémentaire au moyen de bactéries oxydantes anaérobies (AMOX), notamment au moyen de planctomycètes, la boue en excès formée pendant le procédé étant déchargée du bassin et la boue en excès déchargée étant séparée en une phase lourde, qui contient majoritairement les bactéries oxydant l'ammonium anaérobies (AMOX), et en une phase légère, **caractérisé en ce que** la phase lourde est recyclée dans l'installation.

2. Procédé selon la revendication 1, **caractérisé en ce que** la séparation de la boue en excès en une phase lourde et une phase légère est réalisée dans un hydrocyclone.

3. Procédé selon les revendications 1 ou 2, **caractérisé en ce que** la séparation de la boue en excès en une phase lourde et une phase légère est réalisée dans une centrifugeuse.

4. Procédé selon au moins l'une quelconque des revendications précédentes, **caractérisé en ce que** la séparation de la boue en excès en une phase lourde et une phase légère a lieu par sédimentation.
